# EUROPEAN PATENT SPECIFICATION

(11) **EP 3 276 904 B1**
(45) Date of publication and mention of the grant of the patent: **30.09.2020**
(21) Application number: 16020289.1
(22) Date of filing: 29.07.2016
(51) Int. Cl.: H04L 29/06

(54) **METHOD AND SYSTEM FOR MTD**
VERFAHREN UND SYSTEM FÜR MTD
PROCÉDÉ ET SYSTÈME POUR MTD

(43) Date of publication of application: 31.01.2018
(73) Proprietor: Deutsche Telekom AG, 53113 Bonn (DE)
(72) Inventor: Thimmaraju, Kashyap, 10967 Berlin (DE); Roshandel, Mehran, 13591 Berlin (DE); Gowtham, Varun, 13353 Berlin (DE)
(74) Representative: Raible Deissler Lehmann Patentanwälte PartG mbB

(56) References cited:
- EP-A1- 1 583 324
- US-A1- 2004 059 944
- US-A1- 2008 281 966
- US-A1- 2015 236 752

## Description

The present invention refers to a method and a system for enabling at least one node of a communication network including a plurality of nodes to maintain or initiate communication with a process of another node although a present socket address of the process is changing.

Known communication protocols assign globally a unique address to a node of a communication network, respectively, to identify and facilitate communication between nodes in a communication network. Specifically the Internet Protocol (IP) uses an IP address to uniquely identify a node in a network. A combination of the IP address of a node and a port number is called a socket address. Particularly, the port number in the socket address can be designated to a process which runs on the respective node. A data packet sent from a first node acting as a source node to a second node acting as a destination node includes a destination socket address (and may also include a socket address of the source node). The destination IP address included in the data packet plays a significant role in guiding network elements to route the data packet to the destination node through the network. The port number included in the data packet identifies a specific process of the destination node. During transit from the source node to destination node, a data packet can be examined to reveal the destination socket address.

In some implementations a process on a node can be available for communication and can be viewed as a service offered by a node to other nodes in the network. In a client-server paradigm, the server is a node which offers at least one service to a set of clients. It might happen that the service offered from the server is not accessible or denied to the clients requiring the service. This situation in literature is generally called Denial of Service (DoS). DoS inflicted upon clients could be deliberate or non-deliberate on part of the server. In some cases of deliberate DoS to clients, the server may discretely deny the service to a specific set of clients. In some cases, although the server is ready to deliver a service, the clients are denied of service which clearly is a non-deliberate DoS from the server. There may be a failure of link connecting to the server or the server may be inactive due to maintenance. Also in some known cases of non-deliberate DoS, it could be that the server is under DoS attack.

DoS attacks on a server induce non-deliberate DoS to the clients, where the server is unable to respond to service requests from the clients or there could be a degradation in service offered to the clients. DoS attacks aim to overwhelm and exhaust resources on the server such that the server becomes unresponsive to the clients. In the scope of the present disclosure DoS attacks mentioned further in the document refer to network based DoS attacks. Typical examples of DoS attacks include Ping of Death, TCP SYN attack etc. Preventing DoS attacks are of high importance for a service oriented business, where an adversary could inflict loss and embarrassment to the business.

With the exception of volume attacks where the server's link is flooded to saturation such that service requests from the clients cannot be accommodated, known types of DoS attacks are targeted on a service. Identified in the network using a respective socket address, a service is accessible by a client using the socket address. Address based DoS attacks use the socket address to target attacks on the service. In other words, it can be understood that the socket address is the basis for a DoS attack without which it is not possible to target a DoS attack.

In literature, a DoS attack originating from a plurality of sources is called Distributed DoS (DDoS) attack. A DDoS attack has the ability to magnify the DoS attack on a service. DDoS attacks are coordinated among several sources to exceed the finite resources of a server and are of concern for businesses. It can be difficult for a victim to expect and prepare for such an attack. Numerous examples of such attacks are available in literature. It is therefore necessary for a respective defender to develop strategies which could help mitigate effects or prevent DoS attacks.

As a defense strategy, the defender can change the socket address of the service frequently and unpredictably such that it becomes increasingly difficult for an adversary to fix on a socket address to launch a DoS attack on the respective service. This method of approach in literature is generally referred to in the literature as "Moving Target Defense (MTD)". A defending node whose service is employing MTD must also coordinate the changing addresses to its clients.

Moving Target IPv6 Defense (MT6D) from Dunlop et al. (M. Dunlop, S. Groat, W. Urbanski, R. Marchany and J. Tront, "MT6D: A Moving Target IPv6 Defense," 2011 - MILCOM2011 Military Communications Conference, Baltimore, MD, 2011, pp. 1321-1326) use vast address space of IPv6 to periodically rotate the IP address of a host. The method described by Dunlop et al. requires that each host maintain records of one-one mapping of other MT6D hosts. Jafarian et al. (Jafar Haadi Jafarian, Ehab Al-Shaer, and Qi Duan. 2012. Openflow random host mutation: transparent moving target defense using software defined networking. In Proceedings of the first workshop on Hot topics in software defined networks (HotSDN '12). ACM, New York, NY, USA, pp. 127-132) introduce Open Flow Random Host Mutation (OF-RHM) which mutates a real IP address of an end host into a virtual IP address. Apart from requiring a specialized Software Defined Networking (SDN) infrastructure having explicit flow rules at open flow switches for correct routing of packets to an end host, the authors also claim that end hosts could still be reached by a name which is a drawback of the method. Further switches need to be updated every time a virtual IP is generated for the end hosts. SDN Shuffle by MacFarland et al. (Douglas C. MacFarland and Craig A. Shue. 2015. The SDN Shuffle: Creating a Moving-Target Defense using Host-based Software-Defined Networking. In Proceedings of the Second ACM Workshop on Moving Target Defense (MTD '15). ACM, New York, NY, USA, pp. 37-41) shows that a host sending resolution request to obtain the IP address of the named host could be responded with a random IP address having low time to live value. The named host could then write translation rules for the given random address. The address which is shuffled after DNS resolution response time to live, expires when the host sends another resolution request to the named host to obtain yet another random IP address of the named host.

MT6D maintains a one-one record on each host about the communicating hosts. This might hamper the efficiency of performing hosts because in a client-server infrastructure, as a number of clients increases the load on the server increases. It is to be observed that while hopping IP addresses of the server is the norm, the addresses that can be used need to be verified to be free and unused. This is of specific concern in IPv4. OF-RHM uses the infrastructure of SDN and needs flow rules defined and updated for the hopping virtual IP addresses. This affects scalability of the OF-RHM method. It is of concern for scalability in SDN shuffle considering that the server needs to maintain translation rules for each client in communication.

IP address hopping approaches have also been suggested in some patent documents. Wright Sr David D. U.S. Patent 9,203,798 describes a method wherein an end node hops its IP address in pseudo random order picked from a sequential set of IP addresses typically available in a network suffix. Further the source node communicating with the end node is able to follow the hopped IP address of the end node. Previously used IP addresses may not be used in future hops.

Macdaniel, US Patent 7,114,005 describes a method in a packet switched network where a translation module at the source node side translates the source and destination addresses in a data packet and at the destination side when the data packet is received at another translation module the translated addresses are resolved into original addresses before the data packet reaches to the intended destination node. Hopping of IP address is possible in translated addresses.

Fink et al. US Patent 7,043,633 describes a method similar to one described by US Patent 7,114,005, except that a network prefix identifying the destination side router is kept constant while the suffix identifying the machine in the network is hopped.

Katz et al., US Patent 7,216,359 describes a method where clients and server are provided with synchronized random number generator blocks. By the method claimed, the random number generated both at the client and server simultaneously is the same and the IP address corresponding to the random number generated is used for communication with the server. Two or more clients would not be able to communicate with the server using the same server address. New random numbers are generated to facilitate hopping.

Shawcross, US Patent 6,889,090 describes a method where the server uses the multicast address, such that the clients connecting to the server should already be registered with the server thus avoiding potential attacks from unregistered clients.

US2004059944 discloses DDoS protection. The service is provided in successive time intervals at different active network addresses. Only authorized service users know the address at the specified time. A common secret "seed" is used to initialize a pseudo-random number generator and further a table is used which contains an association between time intervals and active network addresses in an address pool.

Patent documents described so far might not scale well for a scenario like client-server paradigm where a plurality of clients is served by a single server. An attacker can launch an address based DOS attack on the server and further clients may not be able to access the server. It can also be observed that the hopping of IP addresses is not contained to a specific set of IP addresses. Containment of hoppable set of IP addresses is of particular importance when taking lease of IP addresses for a server. It is also possible that available free addresses may not be available in a sequential order but rather randomly distributed. It is now of practical importance to hop in the available set of IP addresses and further efficiently mitigate DOS attack efforts from adversaries.

It will be of high importance if there is a method which could bring forward the MTD for present industry. IP addresses in IPv4 are of high value in the current industry. MTD techniques need to treat IP addresses as a valuable resource and facilitate their reuse.

Therefore, it is an object of the present invention to provide a method and a system for MTD, wherein a node employing MTD for one of its services, can coordinate changing socket addresses to its clients, so that the service is defended against address based DoS attacks and the node acting as server can still deliver the service to its clients.

It is a further object of the present invention to provide a method and a system to efficiently mitigate DOS attack efforts from adversaries and to also concentrate on reusing IP addresses.

The problem is solved by a method and a system with the features of the independent claims, respectively. Further embodiments of the claimed method and the claimed system are described in the dependent claims and the following description.

The present invention provides a method according to the independent claim 1.

A communication network includes a plurality of nodes. A process on a first node, in the following called "server", can be accessed by at least one second node, in the following called "client", using a first socket address comprising IP address of the server and a port number of the process running on the server. The first socket address changes to a second socket address and the at least one second node, i.e. the client in communication with the first process is able to track a change in socket address of the process of the first node. The method and the system according to the present invention enable at least one node to maintain or initiate communication with the process of the first node although the socket address of the process is changing (hopping). Generally, the server can provide one or more services to one or more clients. In the following all explanations dealing with "a client" and "the client", are also valid for a plurality of clients.

In some examples, when there are sufficiently many IP addresses in the address space, a hopping only in the IP address space is possible. In cases where limited IP address space is available for hopping, socket addresses are used since an adversary can learn about all the IP addresses and launch attack on all the observed hoppable IP addresses simultaneously. For example, an adversary targeting a known service like Hypertext Transfer Protocol (HTTP) can attack designated port 80 on all the observerd hopping IP addresses. Therefore, socket addresses can be interchanged with IP addresses in cases where there are sufficiently many available IP addresses to hop. According to the definition of a "socket address" as a combination of the IP address of the server and a port number of the service, a hopping only in the IP address space is also accompanied by a respective change of the socket address of the service running on the server whose IP address is changed.

According to one embodiment of the claimed method, step (d) further comprises the step of generating a random number, the generated random number being used to select the new socket address from the address bank.

Thereby, it is possible, that generating the random number is based on the at least one shared event and the at least one shared secret.

This step can be realised by an algorithm running as random number generator (RNG) on server side and on client side, respectively, and which takes the shared event and the shared secret as input to give a random number. This random number can be pseudo or truly random in nature. For an identical generation of a random number between the server and the client, the RNGs and their inputs on both sides, i.e. on server side and on client side, must be identical. Further, the generation of the random number on server side must be synchronized with the generation of the random number on client side. A frequency of the generation of a random number is decided by the time intervals of the occurence of the at least one shared event. The at least one shared event can be configured to alter time intervals for longer or shorter durations.

According to a further embodiment of the present invention, step (b) further comprises the step of arranging the address bank in an array spanning a 2D-address space, wherein a first dimension represents an available number m of IP addresses and a second dimension represents an available number n of port numbers on the server, wherein m, n are integers, thus forming an address space of m x n socket addresses.

Thereby, it is possible, that the available number m of IP addresses is composed of IPv4 and/or IPv6 addresses. The IP addresses which are used may be a partial set of the available IP addresses. Those selected IP addresses are combined with a respective set of port numbers in a unpredictable manner. A possible mechanism for a non sequential ordering of addresses could be shuffling the address space as, for example, by applying the Fisher-Yates algorithm.

According to still another embodiment of the claimed method, the at least one shared event in step (a) is chosen as a time interval signaled by synchronized clocks between the client and the server or as an instruction from the server to the client. Strictly, an event, i.e. the at least one shared event, can be anything that signals a hop of a socket address at the server and at the client. The at least one shared event can also be a combination of different types of events.

There are three features of hopping that are considered by the claimed method:
- Address reuse: a socket address in the address bank can be reused in future hops. Address reuse promotes efficient and economical use of IP addresses. Especially in limited address space of IPv4, reuse of an IP address shows the relevance of the claimed method in IPv4 dominated networks and is extendable to IPv6.
- Random hopping: on the occurrence of the at least one shared event, the new socket address used on the next hop is truly random or pseudo random compared to the present socket address used before the occurrence of the shared event. With this feature, it is difficult to predict the next socket address that will be used.
- Hopping intervals: Since the time intervals between hopping are defined by the occurrence of the shared event, it can be observed that time intervals can be regular or irregular or a combination of regular and irregular as agreed between the client and server.

In still another embodiment of the claimed method, step (a) is performed at an initialization phase of a moving target defense (MTD) procedure extending at least to the server and the client or by an authentication procedure performed between the server and the client.

According to a further embodiment of the claimed method, the method further comprises the step of establishing of trust between the client and the server by an authentication mechanism, including sharing the address bank, the at least one shared event and the at least one shared secret.

Generally, an authentication algorithm (mechanism) is running on both, on server and on client side. The authentication algorithm provides means to establish trust between the client and the server. It may include exchange of confidential information through out of band communication or through secure communication in band.

In the scope of the present disclosure, in band communication refers to a communication which happens in a communication link which hosts use in the communication network and may be visible to at least another host. Out of band communication refers to a communication which takes place in a link different from the link used by hosts in the communication network. It could be, for example, that hosts exchange message through an encrypted channel or a separate secured channel. Or in some cases users exchange information and feed it to their hosts, where users become the out of band channel.

At the server, records are provided which hold vital information of all the legitimate clients and which may provide information about clients who would intend to communicate in the future. The authentication algorithm running at the client may enable generation of a client secret exchanged with authentication algorithm running at the server, on the basis of which the authentication algorithm running at the server may add the corresponding client to the records.

The claimed method can further comprise the step of
(e) on occurence of the shared event, converting the socket address of a data packet at the client having before occurence of the shared event the present socket address as destination address, into the new socket address as destination address.

According to still another embodiment of the present method, step (a) comprises the step of generating a plurality of shared events according to predefined strategies, thus defining whether a time interval between two successive events, respectively, is regular or irregular or a combination of regular and irregular.

The present invention also refers to a system for enabling at least one node of a communication network including a plurality of nodes, the at least one node acting as a client, to maintain communication with a process of another node acting as server, although a present socket address of the process is changing. The claimed system comprises components according to the independent claim 10.

In one embodiment of the claimed system, at least one of the components A, B, C, and D comprises two subcomponents, a respective client component and a respective server component, which are configured to fulfill in cooperation the respective function of the respective at least one component A, B, C, or D.

In a further embodiment of the claimed system, the system further comprises a proxy server which is configured to employ instances of at least some of the system components A, B, C, and D or some of the respective subcomponents.

The following detailed description and accompanying drawings provide a better understanding of the nature and advantages of the present invention.

### Brief description of the drawings

Fig. 1 gives an overview of network security aspects related to DoS attacks.
Fig. 2 shows a block diagram of an address space considered for hopping of address.
Fig. 3 shows a diagram showing a hopping scheme in an address space and preferred characteristics for hopping.
Fig. 4 shows a block diagram depicting an embodiment of the system according to the present invention, describing various features of the invention.

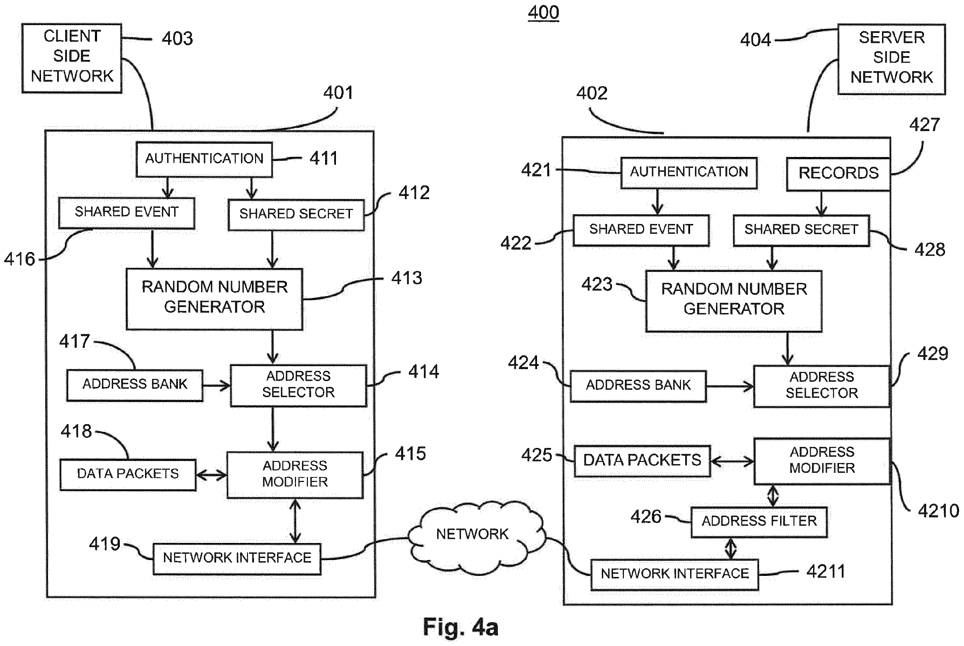

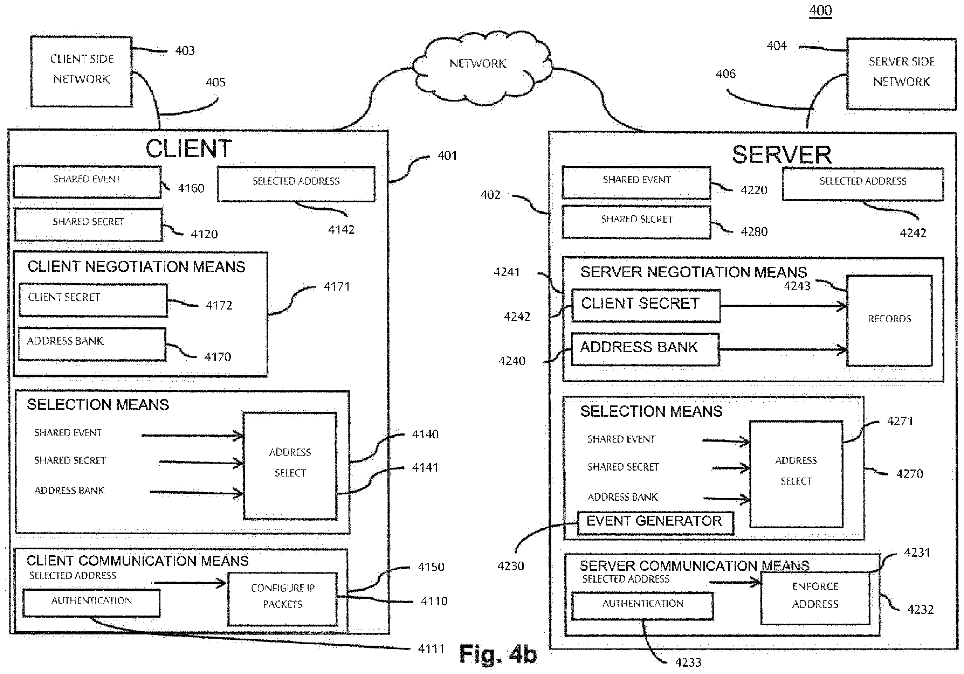

Fig. 4 shows a block diagram depicting another embodiment of the system according to the present invention, describing various features of the invention.

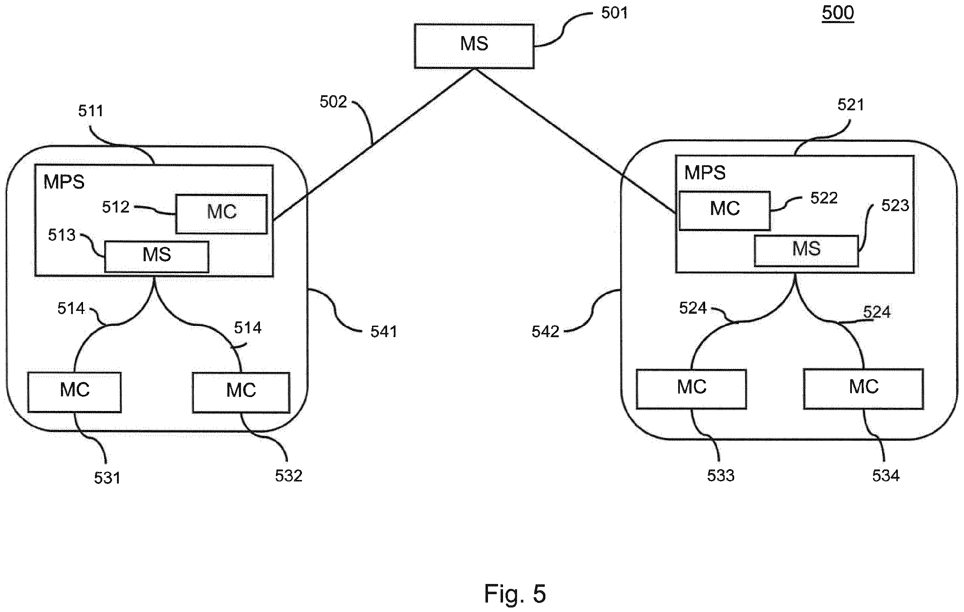

Fig. 5 shows a block diagram showing an introduction of a proxy server as a further embodiment of the system according to the present invention which includes a function of load balancing feature of the invention.

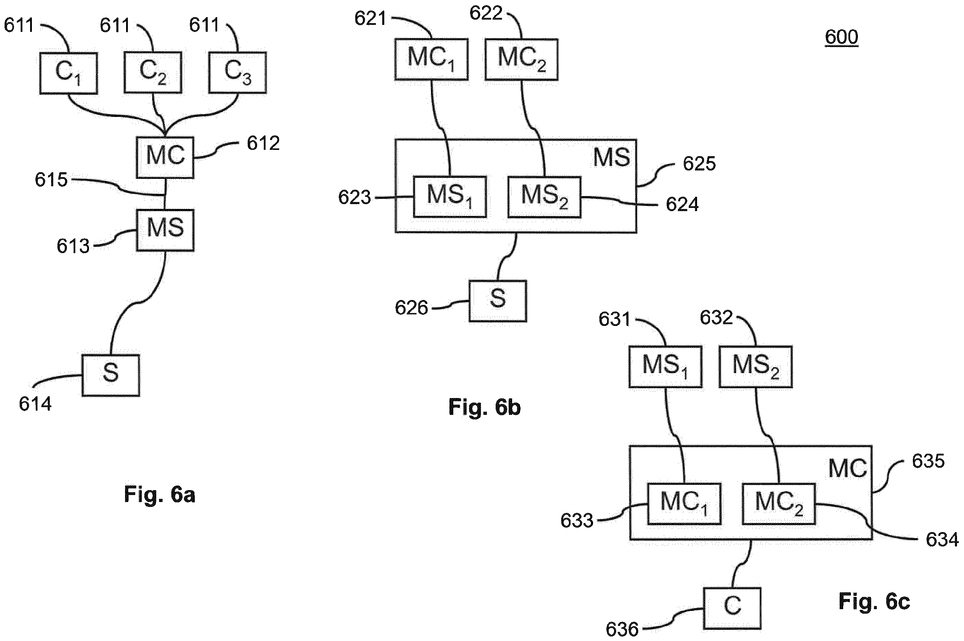

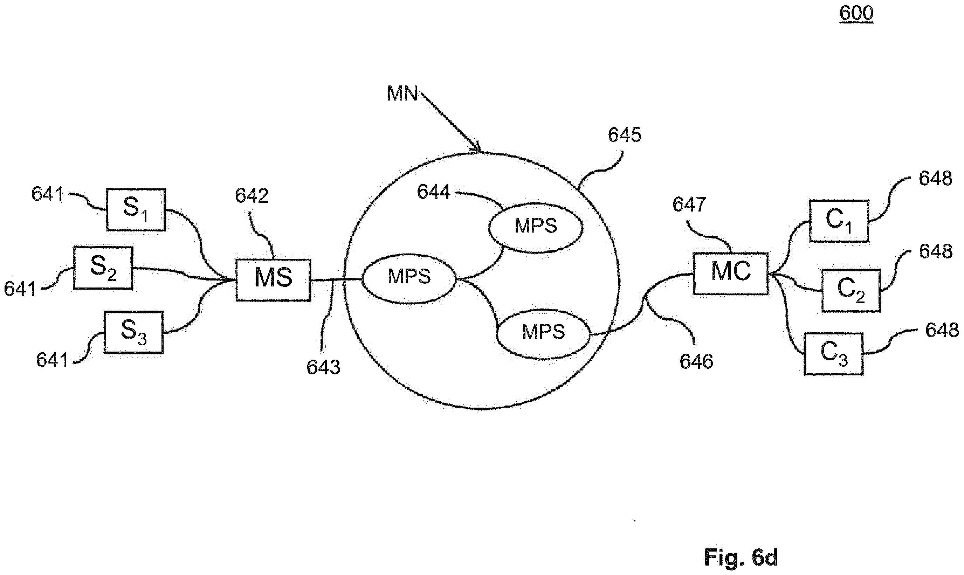

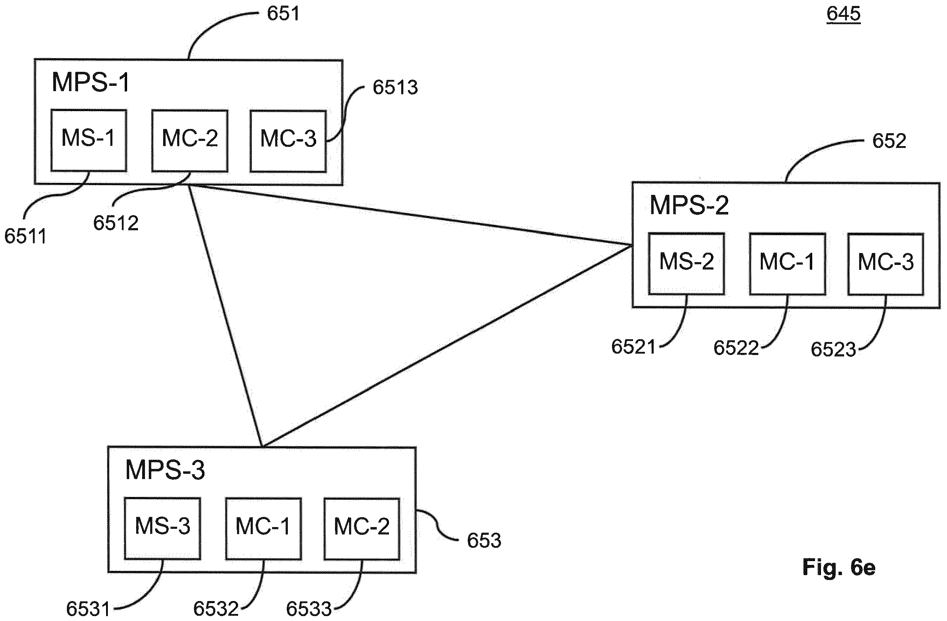

Fig. 6 shows a set of block diagrams showing various abstractions of the invention.

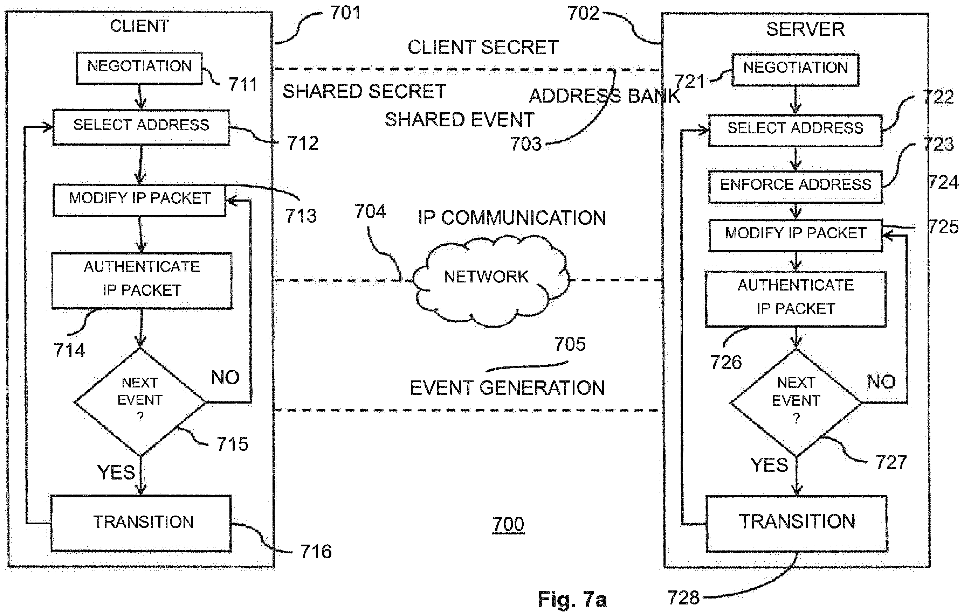

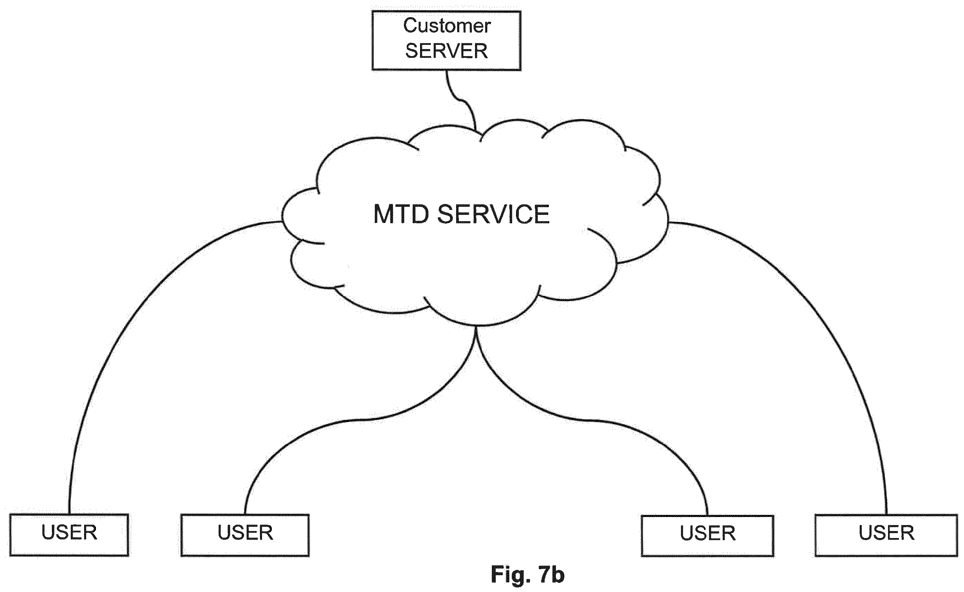

Fig. 7 shows a schematic diagram showing an embodiment of the method of the present invention.

### Detailed description of the drawings

The features of the invention will be described with respect to the figures. The features of the invention which can be extended to show abstractions that can be embodied into possible use cases of the invention are also explained with respect to the figures.

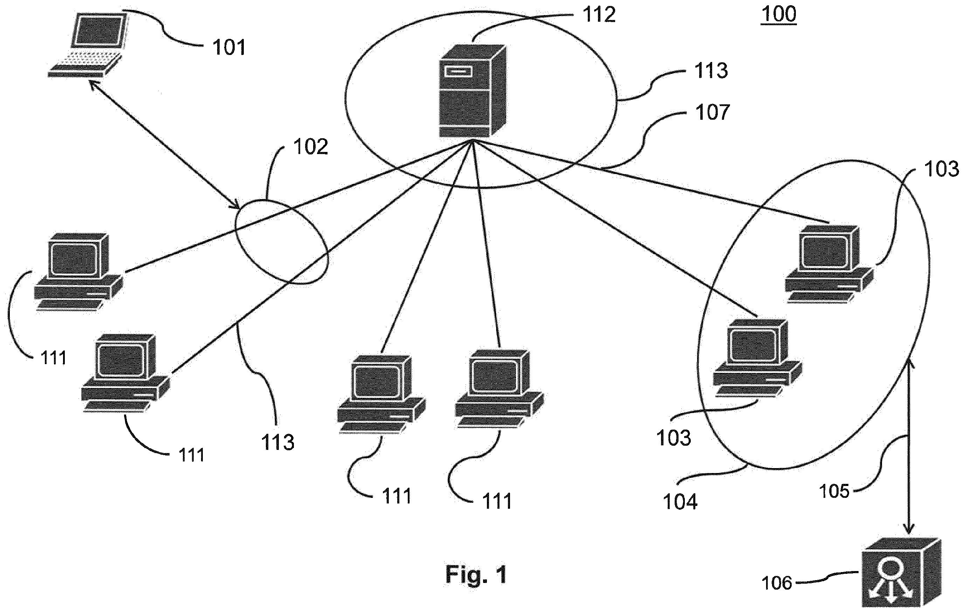

Figure 1 shows a diagram representing a client-server paradigm which contains a server 112 and clients 111. The server 112 is responsible in delivering a service 113 to at least one client 111. As explained before, a data packet flow between client 111 and server 112 can be explored by an adversary 101 on performing reconnaissance efforts 102 to reveal key information about a topology of a network including the client 111 and server 112 socket addresses. The adversary after performing reconnaissance 102 may be able to fix on the target socket address of the server offering the service 113. The adversary intending a malicious intention to compromise service 113 now has enough information to launch a DoS attack 107. A DoS attack on the service 113 can cause significant service degradation if not service denial to the clients 111 shown in the Figure 1. Although adversary performed reconnaissance on a subset of the clients 111, all clients 111 may be affected by the DoS attack 107. The adversary might use a single or multiple attacking nodes 103 to launch DoS attacks 107 on server 112. In case of using multiple attacking nodes 103, the attack is called Distributed DoS attack or DDOS attack. A network of attacking nodes 103 may be configured by the adversary using a controller 106 and link 105. It can be seen that an adversary broadly employs the following steps to launch DDoS or DoS attacks:
Reconnaissance: In this step the adversary learns about the service and more importantly fixes on the target socket address of the service.
Configure attack: Adversary configures an attacking machine to the target socket address.
Launch Attack: Adversary launches a coordinated attack by the attacking machines on the target socket address.

As a defense mechanism, if the server 112 employs a Moving Target Defense (MTD) for the socket address, it becomes increasingly challenging for the adversary to perform the steps mentioned. More importantly MTD significantly inhibits adversary's ability to fix on a target socket address in the reconnaissance stage. The rate and way of changing socket address of the service 113, makes the service link between the clients 111 and server 112 look dynamic for an adversary with respect to changing server address. MTD need to also include a method to coordinate changing socket address of service 113 with the clients 111 synchronously or asynchronously.

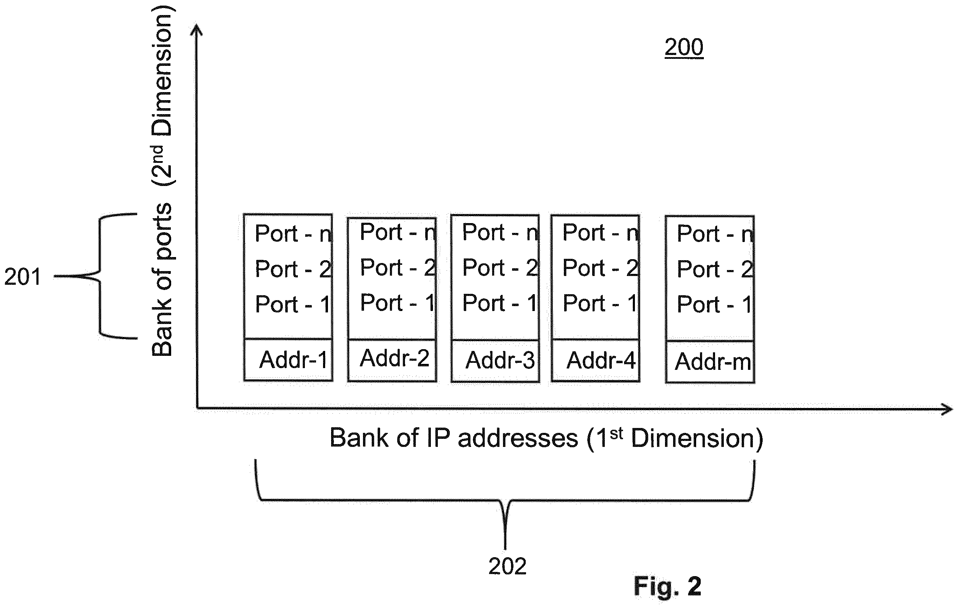

Figure 2 is a block diagram representing an address space used by MTD for selection of addresses. The socket address space 200 is composed of 2-dimensions. The first dimension represented on the horizontal axis is available IP number m of addresses 202 which may be composed of IPv4 or IPv6 addresses. The second dimension represented on the vertical axis is the available number n of port numbers 201 on the server 112. Availability of IP addresses 202 and port numbers 201 are explained below:
Availability of IP addresses 202 concerns with not duplicating or interruption of resources in a network. Particularly IP addresses are unique in a given network. Therefore, no two nodes in the network can be assigned the same IP address. IP addresses are generally assigned by an authority responsible in distribution.

Availability of port numbers 201: A process running on a node, i.e. on the server can open for communication on the network via one of 65536 ports on the node. Certain port numbers are reserved by Internet Assigned Numbers Authority (IANA). Therefore, a subset of 65536 may be available for a process on the server to operate on a port not overlapping with the reserved ports. Further, the availability of port numbers is limited by those port numbers which are currently in use and which are, therefore, no longer available.

With m IP addresses 202 and n port numbers 201, the address space can now be formed of m x n socket addresses 200.

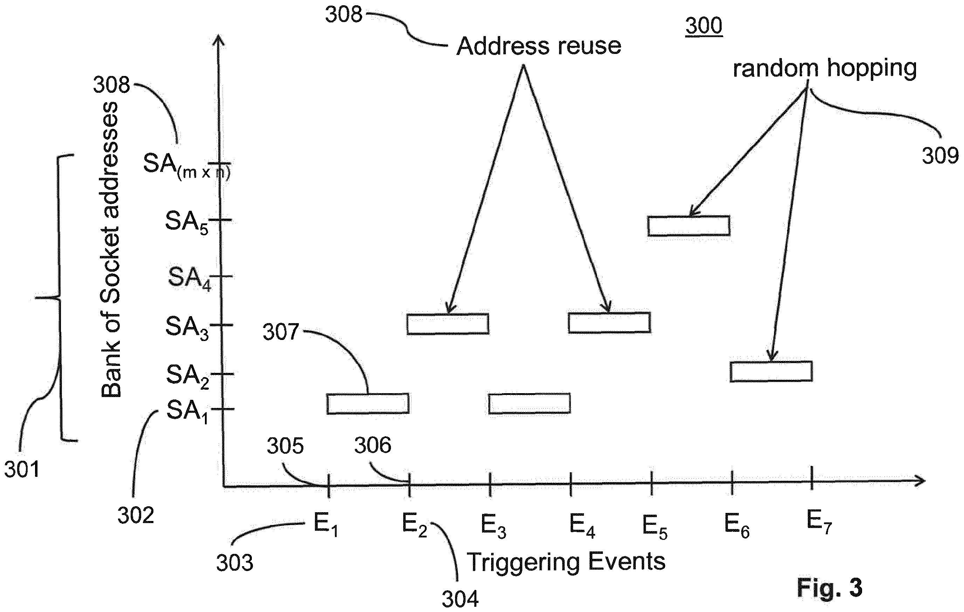

Figure 3 shows a block diagram which represents a selection scheme 300 showing the key features of the MTD mechanism. The horizontal axis represents a temporal occurrence of a shared event. An occurrence of event E1 303 is shown by point in time 305. The vertical axis represents the socket address space 200 arranged in some known order called the bank of socket addresses 301. It could be that socket address space 200 is arranged sequentially or non-sequentially. An event 303 is a coordinated activity between the server 112 and its clients 111 on the occurrence of which the client 111 and the server 112 select and hop to a new socket address different from the present socket address. Hopping to a new socket address shows that from the duration of event E1 303, i.e. temporal occurrence signified by point in time 305 till occurrence of event E2 304 shown by point in time 306, a socket address SA1 302 is used, collectively represented by socket address duration 307. In the socket address duration 307, the client 111 communicates with service 113 of server 112 using the socket address SA1 302. This method can be extended for future shared events. Socket address SA2 is in use from the duration of occurrence of event E6 to E7. The events represented on the horizontal axis can belong to a set of events comprising various activities that can act as triggers. The events, i.e. the shared events may be time intervals signaled by synchronized clocks between clients 111 and server 112. The events can overlap for a suitable time to facilitate practical implementations. An event can also be an instruction from the server 112 to clients 111. Strictly an event can be anything that signals a hop of socket address at server 112 and clients 111. The events represented on the horizontal axis can belong to a single type of event or a combination of type of events. There are three features of hopping that needs to be observed:
Address reuse 308: It shows that a socket address in the socket address bank can be reused in future hops. It is this feature which promotes efficient and economical use of IP addresses. Especially in limited address space of IPv4, reuse of IP address shows the relevance in IPv4 dominated networks and is extendable to IPv6.

Random hopping 309: It shows that on the occurrence of an event, i.e. a shared event, the socket address used on the next hop is truly random or pseudo random compared to the present socket address used before the occurrence of the event. With this feature it is difficult to predict the next socket address that will be used.

Hopping intervals: Since the time intervals between hopping are defined by the temporal occurrence of the events, it can be observed that time intervals can be regular or irregular or a combination of regular and irregular as agreed between the clients 111 and server 112.

In the following, two approaches are visualized to express embodiments of the invention. Figure 4a is more specific; Figure 4b is more open giving opportunity for variations.

Figure 4a shows a block diagram of an embodiment of the claimed system. An example network includes a client 401 similar to client 111 and a server 402 similar to server 112. There may be a client side network 403 connected to client 401 in the case of which client 401 acts as a border device for client side network 403. Similarly, there may be a server side network 404 connected to a server 402, in the case of which server acts as a border device for the server side network 404. The operations and nature of components of server 402 and client 401 can be understood as follows:
SHARED EVENT 416 and 422: The pair representing a shared event as a co-ordinated activity as shown in address hopping scheme 300 between the client 401 and the server 402. This could be defined explicitly at an initialization of MTD or could be initialized by AUTHENTICATION 421. SHARED EVENT 416 and 422 could change during a lifetime of a MTD operation.
SHARED SECRET 412 and 428: The pair represents information shared between client 401 and server 402. This could be defined explicitly at the initialization of MTD or could be initialized by AUTHENTICATION 421. SHARED SECRET 412 and 428 could be changed during the MTD operation.
ADDRESS BANK 417 and 424: This pair represents the bank of socket addresses discussed in 300.
RANDOM NUMBER GENERATOR (RNG) 413 and 423: This pair represents an algorithm which takes SHARED SECRET and SHARED EVENT as input to give a random number. This random number could be pseudo or truly random in nature. For identical generation of random number between server 402 and client 401, RNG 413 and 423 need to be identical. The frequency of generation of the random number is decided by the time intervals of occurrence of the SHARED EVENT. The SHARED EVENT could be configured to alter time intervals for longer or shorter durations.
AUTHENTICATION 411 and 421: This pair provides means to establish trust between client 401 and server 402. It may include exchange of confidential information through out of band communication or through secure communication in band communication. RECORDS 427 at server 402 holds vital information of all legitimate clients and it may provide information about clients 401 who would intend to communicate in the future. A mechanism of authentication 411 client 401 may enable generation of a client secret exchanged between the AUTHENTICATION 421, on the basis of which AUTHENTICATION 421 may add the corresponding client to the RECORDS 427.

On establishment of trust between AUTHENTICATION 421 and 411 pair, AUTHENTICATION 421 shares ADDRESS BANK 424 with the AUTHENTICATION 411 to create a copy of ADDRESS BANK 424 as ADDRESS BANK 417. Additionally AUTHENTICATION 421 may also share SHARED SECRET 428, SHARED EVENT 422 and RNG 423 as SHARED EVENT 416, SHARED SECRET 412 and RNG 413, respectively. The sharing of information may occur more than once in the lifetime of MTD.

ADDRESS SELECTOR 429 and 414: This pair represents rules and policies to select a socket address from the corresponding ADDRESS BANK using the random number generated by the corresponding RNG. On client 401, the ADDRESS BANK 417 may be arranged in an array and random number generated by RNG 413 may be transformed to point to an index of the array.

It can be understood that identical socket addresses are generated both at client 401 and server 402 if the respective pairs of SHARED EVENT, SHARED SECRET and ADDRESS BANK are identical.

ADDRESS MODIFIER 4210 and 415: This pair provides means to modify a header of data packets 418.

ADDRESS MODIFIER 415 is responsible in using the selected new socket address from ADDRESS SELECTOR 414, to modify the destination address of the DATA PACKETS 418 destinated to server 402.

ADDRESS MODIFIER 4210 is responsible in configuring the selected new socket address from ADDRESS SELECTOR 429 such that data packets modified by PACKET MODIFIER 415 reach the server 402. It may include configuring switch rules in the network or the network interface 4211 such that data packets originating from client 401 intended to be received by server 402 are routed and received by server 402. Further ADDRESS FILTER 426 may provide means to filter the data packets arriving at server 402. Data packets containing obsolete socket addresses can be filtered before reaching the server 402.

Client 401 could access or communicate with a service running on server 402 when using the selected new socket address. A mutual communication between client 401 and server 402 using the new socket address is possible. Additionally DATA PACKETS 425 may also include data traffic from internal network if client 401 or server 402 or both, client 401 and server 402 are acting as edge devices. In this case, ADDRESS MODIFIER 4210 may include flow rules for mapping data packets to the correct node using translation rules in the corresponding internal device known to anybody skilled in the art.

A server 402 which implements the explained modules of MTD is said to be defended from DOS attacks.

Figure 4b shows a block diagram of an embodiment of the claimed system 400. An example network includes a client 401 similar to client 111 and a server 402 similar to server 112. There may be a client side network 403 connected to client 401 in the case of which case client 401 acts as a border device for client side network 403. Similarly there may be a server side network 404 connected to a server 402, in the case of which the server acts as a border device for the server side network 404. The operations and nature of components of the server 402 and client 401 can be understood as follows:
SHARED EVENT 4160 and 4220: The pair representing a coordinated activity as shown in address hopping scheme 300 between the client 401 and server 402. This could be defined explicitly at an initialization of MTD or could be initialized by authentication as described in Figure 4a. SHARED EVENT 4160 and 4220 could change during the lifetime of MTD operation.
SHARED SECRET 4120 and 4280: The pair represents information shared between client 401 and server 402. This could be defined explicitly at the initialization of MTD or could be initialized by authentication. SHARED SECRET 4120 and 4280 could be changed during the MTD operation.
ADDRESS BANK 4170 and 4240: This pair represents the bank of socket addresses discussed in 300.
NEGOTIATION MEANS 4171 and 4241: Means for establishing trust between client 401 and server 402 which additionally include mechanisms to share data either out of band or in band. The role of NEGOTIATION MEANS can be understood as follows:
   CLIENT NEGOTIATION MEANS (CNM) 4171: This includes procedures for generating a private secret of the client 401 given as CLIENT SECRET 4172 and communicates it with SERVER NEGOTIATION MEANS (SNM) 4241.
   CLIENT SECRET 4172 may be user generated via input keys or generated by an algorithmn associated with a software or hardware entity or both located at the client 401. CNM 4171 is responsible in establishing a trust with SNM 4241 and as a result of establishing trust SNM 4241 shares ADDRESS BANK 4240 with client 401 as ADDRESS BANK 4170.
SERVER NEGOTIATION MEANS (SNM) 4241: This includes establishing trust with CNM 4171 and maintaining track records of trust relationships.

SNM 4241 can share SHARED EVENT 4220 and SHARED SECRET 4280 with CNM 4171 as SHARED EVENT 4160 and SHARED SECRET 4120, respectively. Additionally SNM 4241 includes RECORDS 4243 which contain the information of all trusted clients 401 established during CLIENT SECRET 4172 transactions and records of clients 401 are expected to communicate in the future. In a typical case, CNM 4171 communicates with SNM 4241 as a result of which a copy of CLIENT SECRET 4172 exists as CLIENT SECRET 4242 at the server 402.

CNM 4171 and SNM 4241 may act in accordance during the lifetime of MTD to negotiate and apply changes SHARED EVENT 4160 and 4220, SHARED SECRET 4120 and 4280 and ADDRESS BANK 4170 and 4240 between the client 401 and server 402. Such application of changes during the lifetime of MTD enhances the flexibility of operation towards mitigating DoS attacks by adapting to the environment.

SELECTION MEANS 4140 and 4270 include methods to select a new socket address from the ADDRESS BANK. The SELECTION MEANS 4140 and 4270 are identical. ADDRESS SELECT 4141 and 4271 responsible in selecting the new socket address takes SHARED EVENT, SHARED SECRET and ADDRESS BANK as inputs. On the occurrence of an event, i.e. of a shared event, based on the SHARED SECRET, the new socket address is selected from the ADDRESS BANK. Such selected new socket address agrees with the features shown in the address hopping scheme shown in Figure 3.

In the case that inputs of ADDRESS SELECT 4141 and ADDRESS SELECT 4271 are the same, then identical socket addresses are selected. Occurrence of an event, i.e. a shared event, signals SELECTION MEANS to select a new socket address. ADDRESS SELECT defines strategies and methods involved in hopping. Such methods could be changed during the lifetime of MTD by CNM 4171 and SNM 4241 and adapted to the preferred level of defense.

The selected new socket address is saved as SELECTED ADDRESS 4142 and 4242 at client 401 and server 402, respectively.

EVENT GENERATOR 4230 is responsible in signaling events at server 402. In cases of synchronous event generation between client 401 and server 402, SELECTION MEANS 4270 can share the EVENT GENERATOR 4230 with SELECTION MEANS 4140. In other cases, server 402 can instruct generation of event to SELECTION MEANS 4140 when MTD is active. EVENT GENERATOR 4230 decides whether the time interval between events is regular or irregular or a combination of regular and irregular. EVENT GENERATOR 4230 may change strategies on generating events midway of operation while MTD is being used.

COMMUNICATION MEANS 4150 and 4232 include methods to enable communication between client 401 and server 402 on the communication network. The operation can be understood as follows:
CLIENT COMMUNICATIONS MEANS (CCM) 4150: Responsible in configuring the data packets with the SELECTED ADDRESS 4142 as destination address intended to reach server 402 using the CONFIGURE IP PACKETS 4110.
SERVER COMMUNICATION MEANS (SCM) 4232: Responsible in enforcing (4231) the selected new socket address at the server 402 of the network such that packets destined with SELECTED ADDRESS 4142 can be routed to server 402. This involves configuring the network elements and server 402 identifying itself to NETWORK.

Further the COMMUNICATION MEANS are able to cater to needs of the internal network by using translation rules in case of which client 401 and server 402 act as edge devices for their internal networks. Such translation rules can be understood by ones skilled in the art.

Data packets may be authenticated and check for authentication at client 401 and server 402. Such authentication may be in the form of encrypting/decryption of data packets. AUTHENTICATION 4111 may encrypt the data packet out-bound to server 402 using the CLIENT SECRET 4172 and such in-bound packets can be decrypted by AUTHENTICATION 4233 using the CLIENT SECRET 4242 stored in RECORDS 4243.

The present socket address used in previous to occurrence of the latest shared event is to be closed completely and no communication is entertained in that socket address. This includes closing the ports and IP address except the selected new socket address. However, it is to be stated, that sometimes a temporal overlap of the usage of "old" and new socket address is desireable to facilitate practical applications and to run other MTD applications by the server.

A server 402 employing MTD mechanisms thus discusses is said be defended from DoS attacks.

Collectively from Fig. 4a and Fig. 4b application of changes to SHARED EVENT, SHARED SECRET, ADDRESS BANK and SELECTION MEANS mutually shared beween client 401 and server 402 referred to in the future as shared elements can be used to introduce varied levels of dynamics in the communication network. The changes could be introduced from a source external to the server. For example, human operators could initiate a change of shared elements. The change, according to the invention, is triggered from a network element in the communication network warning of a potential attack, for which the server 402 can respond to increase the level of defense by changing the shared elements individually or collectively. For example change in frequency of SHARED EVENT occurence reflects on frequency of hopping in socket address. Modifications to SELECTION MEANS aids in controlling the level of defense required in terms of randomness of hopping.

Furthermore, SELECTION MEANS can also negotiate a new ADDRESS BANK. To facilitate this action SELECTION MEANS 4270 may obtain a new sample from a super set of ADDRESS BANK 4240 available at server. Such samples can be refreshed during the lifetime of MTD and negotiated with client 401 using NEGOTIATION MEANS.

The source of super set of ADDRESS BANK can be obtained by an IP address distribution authority. For example entities such as IANA can offer a set of available public IP addresses to the server. In another example Internet Service Providers can offer IP addresses to their client servers.

Collectively from Fig. 4a and Fig. 4b RECORDS at server 402 contain information of legitimate clients participating or may participate with MTD operation of server. RECORDS may be used to segregate clients into different classes. Such division of classes can be used to offer varied levels of defense for the server.

It can be understood that in a client-server paradigm, the server which implements the discussed MTD methods is said to be defended against DoS attacks. Such a server is called MTD enabled server (MS) and clients capable of communicating with the MTD enabled server are called MTD enabled clients (MC).

Figure 5 shows a further embodiment of a claimed system. The infrastructure shown here introduces an additional entity called proxy server. The proxy server apart from performing the activities known to one skilled in the art also employs instances of MS and MC. Such proxy server are called MTD enabled Proxy Server (MPS). In one aspect of the invention using MPS gives the ability to distribute load on the MS. In another aspect MPS can develop abstractions for hierarchical implementations of the MTD infrastructure.

In Figure 5 a set of MC 531, 532, 533 and 534 intend to communicate with MS 501 to access a service. MPS 511 includes MC 512 and MS 513. MS 513 is involved in communication via link 514 with MC 531 and MC 532. MPS 521 includes MC 522 and MS 523. MS 523 is involved in communication via link 524 with MC 533 and 534. Data packets from MS 523 can be communicated to the MC 522 of the MPS 521. Further, MC 512 and MC 522 are in communication with MS 501. This enables to carry traffic from MC 531 and MC 532 to MS 501 via MPS 511 and traffic from MC 533 and MC 534 to MS 501 via MPS 521, respectively. A total of original four links have been reduced to two links using a respective MPS. It can be seen that MS 513, MS 523 and MS 501 are defended from DoS attacks. Further reconnaissance efforts from an adversary to understand about MS 501 becomes increasingly challenging as the infrastructure grows. In the present example, an adversary performing reconnaissance at MC 531, MC 532, MC 533 or MC 534 has to surpass two levels of MTD to target and attack MS 501.

Figure 6 provides block diagrams of possible MTD abstractions using the elements MS, MC and MPS introduced in Figure 5.

Figure 6a shows a block diagram representing communication between three clients C₁, C₂ and C₃ 611 similar to clients 111 intending to communicate with a server S 614 similar to server 112. Clients 611 represent the client side network 403 and server 614 represents the server side network 404 connected to MC 612 and MS 613, respectively. Here, MS 613 and MC 612 acting as edge devices connected via MTD enabled link 615. Here, server 614 benefits from the defense against DoS attacks.

Figure 6b shows a block diagram in case where MS 625 defending server S 626 communicates with MC₁ 621 and MC₂ 622. MS 625 needs to include MS₁ 623 and MS₂ 624 communicating with MC₁ 621 and MC₂ 622, respectively. This abstraction enables MS 625 to communicate with MCs belonging to different networks or clients belonging to different classes who may reside in the same network. This abstraction illustrates a possible use case for class of service provided in accordance with RECORDS mentioned in Figure 4a and Figure 4b. Consider the ADDRESS BANK of MS₁ 623 and MS₂ 624 are composed of different subsets of superset of ADDRESS BANK of MS 625. If MC₁ 621 and MC₂ 622 may belong to different class of service at the MS 625. This may enable differential defense offered to MS₁ 623 compared to MS₂ 624. For example a higher defense on MS₁ 623 guarantees a higher availability of service to MC₁ 621 compared to MC₂ 622 in terms of penetration of DoS attacks aimed at MS₁ 623 and MS₂ 624. Further, this enables the possibility of isolation of delivery of service between clients MC₁ 621 and MC₂ 622 both associated with MS 624.

Figure 6c shows a block diagram in case where MC 635 providing communication for client C 636 communicates with MS₁ 631 and MS₂ 632. MC 635 needs to include MC₁ 633 and MC₂ 634 communicating with MS₁ 631 and MS₂ 632, respectively. This abstraction enables MC 635 to communicate with MSs belonging to different networks. In this case MS₁ and MS₂ are defended against DoS attacks.

Figure 6d introduces an MTD network (MN) 645 which includes a network of MPS 644 similar to MPS 511 or MPS 521. Communication is intended between set of servers S1, S2, S3 641 similar to server 112 and set of clients C1, C2, C3 648 similar to client 111. The servers 641 can join the MN 645 using an edge device in the form of MS 642 via link 643 and clients can connect to MN 645 using the MC 647 via link 646. In this case, service requests from clients 648 can reach MC 647 to be routed via MN 645 to reach MS 642 and finally reach servers 641. Internal routing in the MN 645 can be determined by known methods of routing. In this case, the set of servers 641 are defended from DoS attacks. For an adversary performing reconnaissance, it becomes increasingly challenging to determine the topology of the network.

Figure 6e shows a block diagram illustrating an example MN 645. Further this abstraction of MN 645 can be extended for higher and more complex MN 645. The MN includes MPS-x 651, 652 and 653 similar to MPS 511 or MPS 521. The MPS-x of an MN 645 includes N-1 number of MC and a single MS where N is the total number of intended MPS that need to be connected with each other. In Figure 6e MPS-x 651, 652 and 653 are interconnected and intending to communicate. As an example operation consider the following:
MPS-1 651 uses MS-1 6511 to communicate with MPS-2 652 and MPS-3 653 using MC-1 6522 and 6532, respectively. This establishes a defense mechanism for MPS-1 651 against DoS attacks. Outbound traffic from either clients MC-1 6522 or 6532 use the address of the MS-1 6511. For outbound traffic from MPS-1 651 destined to MPS-2 652, MPS-1 651 can use MC-2 6512 to send packets addressed to MS-2 6521. In this case MPS-2 652 is defended against DoS attacks. This combination of communication can be extended to other possibilities in the MN 645 (see Figure 6d). The MPS-x in the MN 645 can share the ADDRESS BANK only to be taken care that there is not collision of IP addresses used. Such coordinated use of ADDRESS BANK between a plurality of MPS can be visualized by one skilled in art.

In another aspect of the MN 645, the communication operations employed by MPS-x can be exploited to server as Virtual Private Networks (VPN). A given MPS acting as a VPN server can open clients at its internal network for VPN with other clients connected to the internal network of another MPS serving as another VPN server.

It can be inferred that MS-MC pair shown in Figure 5 and in entirety of Figure 6 may be possible to share the same ADDRESS BANK with other MS-MC pairs, the SELECTION MEANS operation in each MS-MC pair is responsible to ensure that a hopped socket address contains a unique IP address visible in the scope of the network. Such co-ordinated use of ADDRESS BANK further exemplies the claims of the method intending the economic use of address space.

Figure 7 shows a schematic diagram 700 of a flow of operations performed by client 701 and server 702. The flow can be analyzed as described below.
NEGOTIATION: NEGOTIATION 711 is initiated by client 701 with NEGOTIATION 721 at server 702 either in out of band or in band 703. In this step a CLIENT SECRET is sent from client 701 to server 702. Verifying the credibility and after establishing a trust, the server 702 replies to the client 701 with SHARED SECRET, SHARED EVENT and ADDRESS BANK.
SELECT ADDRESS: A new socket address is selected initially at the client 701 to communicate with the server 702. The new socket address selected by SELECT ADDRESS 712 is the same as the new socket address selected by SELECT ADDRESS 722, thus client 701 is able to communicate with the server 702.
ENFORCE ADDRESS 723: This action is taken at the server 702 to make necessary arrangements such as configuring switches for routing and configuring interfaces on the server to successfully enable routing of data packets containing the selected new socket address by SELECTED ADDRESS 712 at client 701.
MODIFY IP PACKET 713 and 725: This operation is performed both at client to correctly address data packets with the selected new socket address and to consider flow and translation rules corresponding to internal networks associated with the client 701 or the server 702.
AUTHENTICATE IP PACKET 714 and 726: The modified IP packets are received and authenticated by the client 701 to encrypt and sent on the NETWORK using the known methods of IP communication 704. Thus, received data packets from clients 701 are decrypted by the server 702 AUTHENTICATE IP PACKET 726 and sent for further processing in the server. Such packets which fail to authenticate are dropped by server 702. The authentication operations can be employed from server to client.
NEXT EVENT 715 and 725: The client 701 and sever 702 poll for the occurrence of an event, i.e. a shared event described in 300. While the event generation is awaited, the client 701 and server 702 use presently an available selected socket address obtained from 712 and 722, respectively. On the occurrence of an event signaled by EVENT GENERATION 705, a new socket address is selected by both client 701 and server 702. EVENT GENERATION 705 can explicitly or implicitly coordinated by the server 702. Alternatively, client 701 and server 702 wait for the occurence of an event.
TRANSITION 716 and 728: When an event is signaled by EVENT GENERATION 705, both client 701 and server 702 need to prepare for transition to the new socket address. This includes closing port used for the previous socket address and reconfiguring network interface with new IP address and port number at server 702. On client 701 side, the client needs to use newly selected socket address. Whether this transition is to be taken on immediate effect or after certain time is to be decided on agreement between client 701 and server 702.

## Claims

1. A method for enabling at least one node of a communication network including a plurality of nodes, the at least one node acting as a client, to maintain or initiate communication with a process of another node acting as server, although a present socket address of the process is changing, the method comprising at least the steps of:
a) defining at least one shared event as a coordinated activity between the client and the server on the occurence of which the client and the server select and hop to a new socket address different from the present socket address,
b) providing to both, the server and the client, an address bank of available socket addresses, and arranging the address bank in an array spanning a 2D-address space, wherein a first dimension represents an available number m of IP addresses and a second dimension represents an available number n of port numbers on the server,
wherein m, n are integers, thus forming an address space of m x n socket addresses,
c) defining information shared between the client and the server as at least one shared secret,
d) on the occurence of the at least one shared event, selecting, based on the shared secret, a new socket address from the address bank,
wherein the at least one shared event, the at least one shared secret and the address bank are changed individually or collectively by the server when such a change is triggered from a network element in the communication network warning of a potential attack.

2. The method according to claim 1, wherein the step d) further comprises the step of generating a random number, the generated random number being used to select the new socket address from the address bank.

3. The method according to claim 2, wherein generating the random number is based on the at least one shared event and the at least one shared secret.

4. The method according to any one of the preceding claims, wherein the available number m of IP addresses is composed of IPv4 and/or IPv6 addresses.

5. The method according to any one of the preceding claims, wherein the at least one event in step a) is chosen as a time interval signaled by synchronized clocks between the client and the server or as an instruction from the server to the client.

6. The method according to any one of the preceding claims, wherein step a) performed at an initialization phase of a moving target defense, MTD, procedure extending at least to the server and the client or by an authentication procedure performed between the server and the client or by a resynchronize procedure.

7. The method according to any one of the preceding claims, further comprising the step of establishing of trust between the client and the server by an authentication mechanism, including sharing the address bank, the at least one shared event and the at least one shared secret.

8. The method according to any one of the preceding claims, further comprising the step of
e) on occurence of the shared event, converting the socket address of the process having before occurence of the shared event the present socket address, into the new socket address so that the process is addressed and/or accessed by the client using the new socket address.

9. The method according to any one of the preceding claims, wherein step a) comprises the step of generating a plurality of shared events according to predefined strategies, thus defining if a time interval between two successive events, respectively, is regular or irregular or a combination of regular and irregular.

10. A system for enabling at least one node of a communication network including a plurality of nodes, the at least one node acting as a client (401), to maintain or initiate communication with a process of another node acting as server (402), although a present socket address of the process is changing, the system comprising at least the following components:
PA) shared event means which are configured to define at least one shared event (416, 422, 4160, 4220) as a coordinated activity between the client (401) and the server (402) on the occurence of which the client (401) and the server (402) select and hop to a new socket address different from the present socket address,
B) address bank means which are configured to provide to both, the server (402) and the client (401), an address bank (417, 424, 4170, 4240) of available socket addresses, and to arrange the address bank in an array spanning a 2D-address space, wherein a first dimension represents an available number m of IP addresses and a second dimension represents an available number n of port numbers on the server, wherein m, n are integers, thus forming an address space of m x n socket addresses,
C) shared secret means which are configured to define information shared between the client (401) and the server (402) as at least one shared secret, (412, 428, 4120, 4280)
D) selection means which are configured to select, on the occurence of the at least one shared event (416, 422, 4160, 4220) and based on the shared secret (412, 428, 4120, 4280), a new socket address from the address bank (417, 424, 4170, 4240),
wherein the server is configured to change the at least one shared event, the at least one shared secret and the address bank individually or collectively in the case such a change is triggered from a network element in the communication network warning of a potential attack.

11. The system according to claim 10, wherein at least one of the components A, B, C, and D comprises two subcomponents, a respective client component and a respective server component, which are configured to fulfill in cooperation the respective function of the respective at least one component A, B, C, or D.

12. The system according to claim 10 or 11, further comprising a proxy server which is configured to employ instances of at least some of the system components A, B, C, and D or some of the respective subcomponents.

## Patentansprüche

1. Verfahren für das Befähigen mindestens eines Knotens eines Kommunikationsnetzwerts, das eine Mehrzahl von Knoten einschließt, wobei der mindestens eine Knoten als Client fungiert, eine Kommunikation mit einem Prozess eines anderen Knotens, der als Server fungiert, aufrechtzuerhalten oder einzuleiten, obgleich sich eine gegenwärtige Socket-Adresse des Prozesses ändert, wobei das Verfahren mindestens die folgenden Schritte umfasst:
a) Definieren mindestens eines gemeinsamen Ereignisses als koordinierte Aktivität zwischen dem Client und dem Server, bei dessen Eintreten der Client und der Server eine neue Socket-Adresse, die sich von der gegenwärtigen Socket-Adresse unterscheidet, auswählen und auf diese wechseln,
b) Bereitstellen einer Adressenbank verfügbarer Socket-Adressen für sowohl den Server als auch den Client und Anordnen der Adressenbank in einem Array, das einen 2D-Adressraum umfasst, wobei eine erste Dimension eine verfügbare Anzahl m von IP-Adressen darstellt und eine zweite Dimension eine verfügbare Anzahl n von Portnummern auf dem Server darstellt,
wobei m, n Ganzzahlen sind und daher einen Adressraum von m x n Socket-Adressen bilden,
c) Definieren von Informationen, die zwischen dem Client und dem Server geteilt werden, als mindestens ein gemeinsames Geheimnis,
d) bei Eintreten des mindestens einen gemeinsamen Ereignisses Auswählen einer neuen Socket-Adresse aus der Adressenbank basierend auf dem gemeinsamen Geheimnis,
wobei das mindestens eine gemeinsame Ereignis, das mindestens eine gemeinsame Geheimnis und die Adressenbank einzeln oder gemeinsam von dem Server geändert werden, wenn eine derartige Änderung von einem Netzwerkelement in dem Kommunikationsnetzwerk, das vor einem möglichen Angriff warnt, ausgelöst wird.

2. Verfahren nach Anspruch 1, wobei Schritt d) weiterhin den Schritt des Erzeugens einer Zufallszahl umfasst, wobei die erzeugte Zufallszahl verwendet wird, um die neue Socket-Adresse aus der Adressenbank auszuwählen.

3. Verfahren nach Anspruch 2, wobei das Erzeugen der Zufallszahl auf dem mindestens einen gemeinsamen Ereignis und dem mindestens einen gemeinsamen Geheimnis basiert.

4. Verfahren nach einem der vorangehenden Ansprüche, wobei sich die verfügbare Anzahl m von IP-Adressen aus IPv4- und/oder IPv6-Adressen zusammensetzt.

5. Verfahren nach einem der vorangehenden Ansprüche, wobei das mindestens eine Ereignis in Schritt a) als ein Zeitabschnitt, der von synchronisierten Uhren zwischen dem Client und dem Server signalisiert wird, oder als eine Anweisung vom Server an den Client gewählt wird.

6. Verfahren nach einem der vorangehenden Ansprüche, wobei Schritt a) in einer Initialisierungsphase einer Moving Target Defense (MTD)-Prozedur, die sich mindestens auf den Server und den Client erstreckt, oder durch eine zwischen dem Server und dem Client ausgeführte Authentifizierungsprozedur oder durch eine Resynchronisierungsprozedur durchgeführt wird.

7. Verfahren nach einem der vorangehenden Ansprüche, welches weiterhin den Schritt des Vertrauensaufbaus zwischen dem Client und dem Server über einen Authentifizierungsmechanismus umfasst, welcher das Teilen der Adressenbank, des mindestens einen gemeinsamen Ereignisses und des mindestens einen gemeinsamen Geheimnisses einschließt.

8. Verfahren nach einem der vorangehenden Ansprüche, welches weiterhin den Schritt e) umfasst, wobei bei Eintreten des gemeinsamen Ereignisses die Socket-Adresse des Prozesses, welcher vor Eintreten des gemeinsamen Ereignisses die gegenwärtige Socket-Adresse hatte, in die neue Socket-Adresse umgewandelt wird, sodass der Client unter Verwendung der neuen Socket-Adresse den Prozess adressiert und/oder auf ihn zugreift.

9. Verfahren nach einem der vorangehenden Ansprüche, wobei Schritt a) den Schritt des Erzeugens einer Mehrzahl von gemeinsamen Ereignissen entsprechend vordefinierter Strategien umfasst und so definiert, ob ein Zeitabschnitt zwischen zwei aufeinanderfolgenden Ereignissen jeweils regelmäßig oder unregelmäßig oder eine Kombination aus regelmäßig und unregelmäßig ist.

10. System für das Befähigen mindestens eines Knotens eines Kommunikationsnetzwerts, das eine Mehrzahl von Knoten einschließt, wobei der mindestens eine Knoten als Client (401) fungiert, um eine Kommunikation mit einem Prozess eines anderen Knotens, der als Server (402) fungiert, aufrechtzuerhalten oder einzuleiten, obgleich sich eine gegenwärtige Socket-Adresse des Prozesses ändert, wobei das System mindestens die folgenden Komponenten umfasst:
A) Hilfsmittel für gemeinsame Ereignisse, die konfiguriert sind, mindestens ein gemeinsames Ereignis (416, 422, 4160, 4220) als eine koordinierte Aktivität zwischen dem Client (401) und dem Server (402) zu definieren, bei dessen Eintreten der Client (401) und der Server (402) eine neue Socket-Adresse, die sich von der gegenwärtigen Socket-Adresse unterscheidet, auswählen und auf diese wechseln,
B) Adressenbank-Hilfsmittel, welche konfiguriert sind, für sowohl den Server (402) als auch den Client (401) eine Adressenbank (417, 424, 4170, 4240) verfügbarer Socket-Adressen bereitzustellen und die Adressenbank in einem Array anzuordnen, das einen 2D-Adressraum umfasst, wobei eine erste Dimension eine verfügbare Anzahl m von IP-Adressen darstellt und eine zweite Dimension eine verfügbare Anzahl n von Portnummern auf dem Server darstellt, wobei m, n Ganzzahlen sind und daher einen Adressraum von m x n Socket-Adressen bilden,
C) Hilfsmittel für gemeinsame Geheimnisse, welche konfiguriert sind, zwischen dem Client (401) und dem Server (402) geteilte Informationen als mindestens ein gemeinsames Geheimnis (412, 428, 4120, 4280) zu definieren,
D) Auswahl-Hilfsmittel, welche konfiguriert sind, bei Eintreten des mindestens einen gemeinsamen Ereignisses (416, 422, 4160, 4220) und basierend auf dem gemeinsamen Geheimnis (412, 428, 4120, 4280) eine neue Socket-Adresse aus der Adressenbank (417, 424, 4170, 4240) auszuwählen,
wobei der Server konfiguriert ist, das mindestens eine gemeinsame Ereignis, das mindestens eine gemeinsame Geheimnis und die Adressenbank einzeln oder gemeinsam zu ändern, falls eine derartige Änderung von einem Netzwerkelement in dem Kommunikationsnetzwerk, das vor einem möglichen Angriff warnt, ausgelöst wird.

11. System nach Anspruch 10, wobei mindestens eine der Komponenten A, B, C und D zwei Unterkomponenten umfasst, eine jeweilige Client-Komponente und eine jeweilige Server-Komponente, die konfiguriert sind, um in Zusammenarbeit die jeweilige Funktion der jeweiligen mindestens einen Komponente A, B, C oder D zu erfüllen.

12. System nach Anspruch 10 oder 11, welches weiterhin einen Proxy-Server umfasst, welcher konfiguriert ist, um Instanzen mindestens einiger der Systemkomponenten A, B, C und D oder einiger der jeweiligen Unterkomponenten einzusetzen.

## Revendications

1. Procédé permettant au moins un nœud d'un réseau de communication incluant une pluralité de nœuds, l'au moins un nœud agissant comme client, de maintenir ou initier la communication avec un processus d'un autre nœud agissant comme serveur, bien qu'une adresse de socket actuelle du processus change, le procédé comprenant au moins les étapes consistant à :
a) définition d'au moins un évènement partagé en tant qu'activité coordonnée entre le client et le serveur lors de laquelle le client et le serveur sélectionnent et passent à une nouvelle adresse de socket différente de l'adresse de socket actuelle,
b) fourniture, à la fois au serveur et au client, d'une banque d'adresses de socket disponibles, et disposer la banque d'adresses dans un ensemble couvrant un espace d'adresse 2D, une première dimension représentant un nombre m disponibles d'adresses IP et une seconde dimension représentant un nombre n disponible de numéros de ports sur le serveur,
m, n étant des entiers, formant ainsi un espace d'adressage de m x n adresses de socket,
c) définition des informations partagées entre le client et le serveur en tant qu'au moins un secret partagé,
d) sélection, sur la base du secret partagé, lors de la survenance de l'au moins un événement partagé, d'une nouvelle adresse de socket dans la banque d'adresses,
l'au moins un événement partagé, l'au moins un secret partagé et la banque d'adresses étant changés individuellement ou collectivement par le serveur lorsqu'un tel changement est déclenché à partir d'un élément de réseau dans le réseau de communication, avertissant d'une attaque potentielle.

2. Procédé selon la revendication 1, l'étape d) comprenant en outre l'étape de génération d'un nombre aléatoire, le nombre aléatoire généré étant utilisé pour sélectionner la nouvelle adresse de socket dans la banque d'adresses.

3. Procédé selon la revendication 2, la génération du nombre aléatoire étant basée sur l'au moins un événement partagé et l'au moins un secret partagé.

4. Procédé selon l'une quelconque des revendications précédentes, le nombre m d'adresses IP disponibles étant composé d'adresses IPv4 et/ou IPv6.

5. Procédé selon l'une quelconque des revendications précédentes, l'au moins un évènement à l'étape a) étant choisi en tant qu'intervalle de temps signalé par des horloges synchronisées entre le client et le serveur ou en tant qu'instruction du serveur au client.

6. Procédé selon l'une quelconque des revendications précédentes, l'étape a) étant effectuée lors d'une phase d'initialisation d'une défense de cible mobile (DCM) qui s'étend au moins au serveur et au client ou par une procédure d'authentification effectuée entre le serveur et le client ou par une procédure de resynchronisation.

7. Procédé selon l'une quelconque des revendications précédentes, comprenant en outre l'étape d'établissement de la confiance entre le client et le serveur par un mécanisme d'authentification, incluant le partage de la banque d'adresses, l'au moins un événement partagé et l'au moins un secret partagé.

8. Procédé selon l'une quelconque des revendications précédentes, comprenant en outre l'étape e) lors de l'événement partagé, convertissant l'adresse de socket du processus ayant l'adresse de socket actuelle avant la survenance de l'événement partagé, en la nouvelle adresse de socket pour que le processus soit adressé et/ou accédé par le client à l'aide de la nouvelle adresse de socket.

9. Procédé selon l'une quelconque des revendications précédentes, l'étape a) comprenant l'étape de génération d'une pluralité d'événements partagés selon les stratégies prédéfinies, définissant ainsi si un intervalle de temps entre deux évènements successifs, respectivement, est régulier ou irrégulier ou une combinaison régulière ou irrégulière.

10. Système permettant au moins un nœud d'un réseau de communication incluant une pluralité de nœuds, l'au moins un nœud agissant en tant que client (401), pour maintenir ou initier la communication avec un processus d'un autre nœud agissant en tant que serveur (402), bien qu'une adresse de socket actuelle du processus change, le système comprenant au moins les composantes suivantes :
A) des moyens d'événement partagé qui sont configurés pour définir au moins un évènement partagé (416, 422, 4160, 4220) en tant qu'activité coordonnée entre le client (401) et le serveur (402) lors de laquelle le client (401) et le serveur (402) sélectionnent et passent à une nouvelle adresse de socket différente de l'adresse de socket actuelle,
B) des moyens de banque d'adresses qui sont configurés pour fournir à la fois au serveur (402) et au client (401) une banque d'adresses (417, 424, 4170, 4240) d'adresses de sockets disponibles, et disposer la banque d'adresses dans un ensemble couvrant un espace d'adresses 2D, une première dimension représentant un nombre m d'adresses IP disponibles et une seconde dimension représentant un nombre n de numéros de port disponibles sur le serveur, m, n étant des entiers, formant ainsi un espace d'adressage de m x n adresses de socket,
C) moyens de secret partagé qui sont configurés pour définir les informations partagées entre le client (401) et le serveur (402) en tant qu'au moins un secret partagé, (412, 428, 4120, 4280)
D) moyens de sélection qui sont configurés pour sélectionner, lors de l'au moins un évènement partagé (416, 422, 4160, 4220) et basé sur le secret partagé (412, 428, 4120, 4280), une nouvelle adresse de socket dans la banque d'adresses (417, 424, 4170, 4240),
le serveur étant configuré pour changer l'au moins un événement partagé, l'au moins un secret partagé et la banque d'adresses individuellement ou collectivement au cas où un tel changement est déclenché à partir d'un élément de réseau dans le réseau de communication, avertissant d'une attaque potentielle.

11. Système selon la revendication 10, au moins un des éléments A, B, C et D comprenant deux sous-composantes, une composante client respectif et une composante serveur respectif, qui sont configurés pour remplir en collaboration la fonction respective de l'au moins une composante respective A, B, C et D.

12. Système selon la revendication 10 ou 11, comprenant en outre un serveur proxy configuré pour utiliser les instances d'au moins quelques composantes de système A, B, C et D ou quelques sous-composantes respectives.
